(19) Europäisches Patentamt
European Patent Office
Office européen des brevets

(11) **EP 4 131 124 A1**

(12) **EUROPEAN PATENT APPLICATION**
published in accordance with Art. 153(4) EPC

(43) Date of publication:
**08.02.2023 Bulletin 2023/06**

(21) Application number: **20926613.9**

(22) Date of filing: **03.08.2020**

(51) International Patent Classification (IPC):
**G06Q 40/00** (2006.01)    **G06Q 30/04** (2012.01)
**G06Q 40/02** (2012.01)

(86) International application number:
**PCT/KR2020/010200**

(87) International publication number:
**WO 2021/194021 (30.09.2021 Gazette 2021/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.03.2020 KR 20200037262**

(71) Applicant: **Cha, Sam Jun**
**Seoul 06642 (KR)**

(72) Inventor: **Cha, Sam Jun**
**Seoul 06642 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **VALUE-ADDED TAX CALCULATION SYSTEM USING MULTI-PURPOSE TAX INVOICE**

(57)    Provided is a value-added tax calculation system using a multi-purpose tax invoice, whereby a double taxation effect and a redemption effect are removed from a value-added tax calculation method by using an all-stage tax credit method so that the value-added tax calculation system can be usefully used in a jewelry industry, etc.

FIG. 1

EP 4 131 124 A1

**Description**

TECHNICAL FIELD

The present invention relates to a value-added tax calculation system and method, and more particularly, to a value-added tax calculation system using a multi-purpose tax invoice, whereby a double taxation effect and a redemption effect are removed from the value-added tax calculation method by using an all-stage tax credit method so that the value-added tax calculation system can be usefully used in a jewelry industry, etc., and a method thereof.

BACKGROUND ART

Value-added tax (VAT) is a tax that is paid by multiplying an added value produced by a taxable business operator by a certain tax rate (for example, 10%).
There are mainly methods for calculating VAT, such as all-stage transaction amount deduction method and an all-stage tax credit method.
In the all-stage transaction amount deduction method, the amount obtained by deducting the purchase amount (previous step transaction amount) from the sales amount supplied by a business operator during a certain period is regarded as an added value, and this is regarded as the amount subject to taxation, and the amount calculated by applying a tax rate thereto is regarded as the amount of tax paid.

$$\text{The amount of tax paid (no refund)} = (\text{sales amount} - \text{purchase amount}) \times \text{tax rate}$$

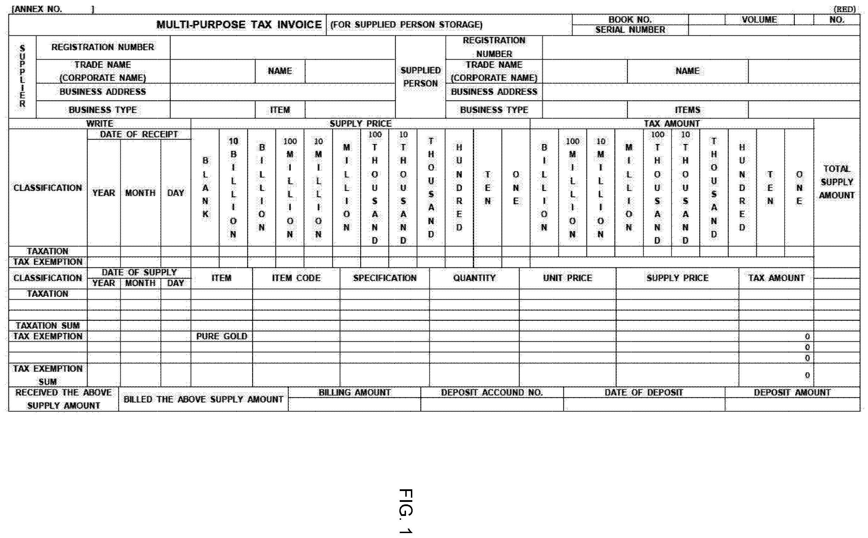

On the other hand, in the all-stage tax credit method, the amount obtained by subtracting the amount of tax (purchase tax amount) paid by being included in the price of goods when purchased from the outside from the amount (sales tax amount) calculated by applying the tax rate to the total sales price of business operators during a certain taxation period, is calculated as the amount of tax to be paid.
In the all-stage transaction amount deduction method, producer taxation in which business operators who create added value pay VAT, is a principle. However, internationally, the producer taxation is converted into taxation in the country of consumption, the zero tax rate is applied to exports that cross borders. In other words, when goods produced in country A are exported to country B, the zero tax rate is applied to return all taxes collected during a distribution process in country A, and VAT (or consumption tax) is imposed separately in country B that is the country of consumption. Thus, in order to impose VAT in a taxation system in the country of consumption, the all-stage tax credit method is unavoidable.
The all-stage tax credit method has characteristics that it is mandatory to issue a tax invoice (see FIG. 1) in which each of the supply price and the sales tax amount is expressed whenever transaction is made. In this case, the amount of tax paid is calculated by deducting the total purchase tax amount from the total sales tax amount for a certain period. In the case of the Republic of Korea, the deduction of the purchase tax amount is regulated by law so that only the total amount of tax shown on the issued tax invoice is allowed.
According to the all-stage tax credit method, the details of each transaction are clearly identified for each type of goods or services whenever transaction is made. Thus, it is easy to not only understand the tax paid according to the type of individual goods or services, but also set tax exemptions or taxation for each item. In addition, by applying the zero tax rate to exported goods, the amount of tax paid in the Republic of Korea can be reliably refunded to exporters.
However, according to the all-stage tax credit method that is a VAT taxation method in the Republic of Korea, only the purchased tax amount when a business operator issues a tax invoice can be deducted so that, when goods for which a tax invoice cannot be issued, such as in tax exemption agricultural products or used goods, are purchased and manufactured and processed or sold without changes, the purchase tax amount cannot be deducted and thus, there is a disadvantage of paying more tax than the tax on added value newly created by the business operator.
In order to solve this advantage, a deemed purchase tax amount is currently deducted, but an exceeding tax burden amount is also not actually eliminated entirely. In addition, because the deemed purchase tax amount is refunded at the zero tax rate even when goods for which VAT is not paid are exported, there is a disadvantage in that it causes a loss in the national treasury equivalent to the refund of the deemed purchase tax amount.
A method of calculating the amount of tax paid according to the all-stage tax credit method is as follows.

> The amount of tax paid (refunded tax amount) = (sales price x tax rate/(1+tax rate) – purchase tax amount – deemed purchase tax amount

As described above, in the all-stage tax credit method, the application of the reduced tax rate or tax exemption is performed at the previous transaction stage that is not at the retail stage, and when taxation is imposed in the next stage, the double taxation effect or redemption effect of VAT occurs so that the effect of reducing the tax burden of a final consumer due to the application of the reduced tax rate or tax exemption may be eliminated.

For example, a business operator who collects and sells used goods that have already been subject to VAT cannot receive a tax invoice at the time of collection and cannot receive purchase tax deduction. Thus, when the business operator makes tax affairs report on the sale, the double taxation effect of VAT occurs. Also, in the case of a taxable business operator who purchases goods treated as general tax exemption and sells products manufactured and processed with raw materials as taxable goods, VAT is newly imposed on the raw materials that were exempted from VAT at the previous transaction stage so that in the eyes of the government, a redemption effect may occur.

Such the double taxation effect and redemption effect undermine the neutrality and equity of taxation, and a value-added tax calculation system that can eliminate the double taxation and redemption effects while adopting the all-stage tax credit method is required.

In addition, in the Republic of Korea, the timing of issuance of tax invoices is, in principle, required to coincide with the timing of supply of goods or services. Thus, because tax invoices are issued even when goods are supplied on credit, the duty of tax payment to a supplier occurs, whereas a supplied person can receive deduction refund without paying the amount of supply including the VAT so that there is a disadvantage of an outflow of the national treasury due to an illegal refund.

[Prior-art document]

[Patent document]

(Patent document 1) Korean Patent Registration No. 10-0787166 (published on December 21, 2007)
(Patent document 2) Korean Patent Registration No. 10-1305276 (published on September 6, 2013)
(Patent document 3) Korean Patent Registration No. 10-1075217 (published on October 19, 2011)

DETAILED DESCRIPTION OF THE INVENTION

TECHNICAL PROBLEM

The present invention provides a value-added tax calculation system using a multi-purpose tax invoice, whereby the multi-purpose tax invoice is used so that a double taxation effect and a redemption effect can be eliminated while adopting an all-stage tax credit method and the issuance date of a tax invoice coincides with the date of receipt of the amount of supply so that deduction refund is not made by the purchase tax amount that is not paid to a nation and an outflow of the national treasury can be prevented, and a method thereof.

TECHNICAL SOLUTION

According to an aspect of the present invention, there is provided a value-added tax calculation system using a multi-purpose tax invoice, the value-added tax calculation system for calculating value-added tax by using an all-stage tax credit method, including: a sales tax invoice issuance unit configured to issue a multi-purpose tax invoice on a date of receipt of an amount of supply for supplying goods or services, wherein, in a supply price as a price of goods or services excluding tax, taxable items and non-taxable items are separately recorded, the sales tax invoice issuance unit issuing a multi-purpose tax invoice in which the amount of supply obtained by adding a sales tax amount of the taxable items to the supply price is recorded; a purchase tax invoice collection unit configured to collect multi-purpose tax invoices provided while paying a purchase price for purchasing goods or services necessary for the goods or services to be supplied; and a value-added tax calculation unit configured to calculate an amount obtained by deducting a total amount of purchase tax amount collected by the purchase tax invoice collection unit from a total amount of sales tax amount issued by the sales tax invoice issuance unit for a certain taxable period, as value-added tax (VAT).

The sales tax invoice issuance unit may apply to the National Tax Service for a virtual account that can pay the amount of supply in the multi-purpose tax invoice, the virtual account may be granted and described.

The supply price of the amount deposited into the virtual account may be deposited to the supplier's business account and the sales tax amount of taxable items may be deposited to the supplier's sales tax account separately.

When the issuer of the multi-purpose tax invoice of the purchase tax amount collected by the purchase tax invoice collection unit does not pay tax, the value-added tax calculation unit may regard the case as a multi-purpose tax invoice different from the fact and excludes purchase tax deduction for the amount.

According to another aspect of the present invention, there is provided a method of calculating value-added tax by using an information processing device based on a multi-purpose tax invoice, the method including: (a) issuing a multi-purpose tax invoice on a date of receipt of an amount of supply for supplying goods or services, wherein, in a supply price as a price of goods or services excluding tax, taxable items and non-taxable items are separately recorded, the sales tax invoice issuance unit issuing a multi-purpose tax invoice in which the amount of supply obtained by adding a sales tax amount of the taxable items to the supply price is recorded; (b) collecting multi-purpose tax invoices provided while paying a purchase price for purchasing goods or services necessary for the goods or services to be supplied; and (c) calculating an amount obtained by deducting a total amount of purchase tax amount collected by the purchase tax invoice collection unit from a total amount of sales tax amount issued by the sales tax invoice issuance unit for a certain taxable period, as value-added tax (VAT).

(a) may include applying to the National Tax Service for a virtual account that can pay the amount of supply in the multi-purpose tax invoice, the virtual account being granted and described.

The supply price of the amount deposited into the virtual account may be deposited to the supplier's business account and the sales tax amount of taxable items may be deposited to the supplier's sales tax account separately.

When the issuer of the multi-purpose tax invoice of the purchase tax amount collected by the purchase tax invoice collection unit does not pay tax, the value-added tax calculation unit may regard the case as a multi-purpose tax invoice different from the fact and excludes purchase tax deduction for the amount.

EFFECTS OF THE INVENTION

According to the present invention, remarkable effects in which a double taxation effect and a redemption effect can be effectively eliminated while using an all-stage tax credit method that is easy to implement an internationally-recognized taxation system in the country of consumption and in principle, the timing of issuance of tax invoices for goods or services coincides with the supply period of goods or services so that a disadvantage of an outflow of the national treasury due to an illegal refund can be eliminated, can be obtained.

DESCRIPTION OF THE DRAWINGS

FIG. 1 illustrates a tax invoice according to the related art.
FIG. 2 is a block diagram illustrating the configuration of a value-added tax calculation system using a multi-purpose tax invoice according to the present invention.
FIG. 3A and FIG. 3B illustrate a multi-purpose tax invoice according to the present invention.
FIG. 4A and FIG. 4B illustrate a value-added tax calculating method using a multi-purpose tax invoice according to the present invention applied to a precious metal wholesaler in the jewelry industry in detail.

MODE OF THE INVENTION

Hereinafter, the present invention will be described in detail with reference to the accompanying drawings.

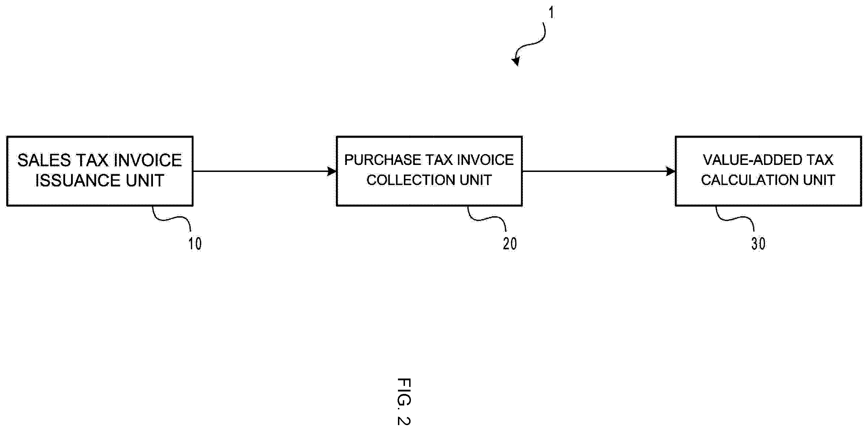

According to FIG. 2, a value-added tax calculation system 1 using the multi-purpose tax invoice according to the present invention includes a sales tax invoice issuance unit 10, a purchase tax invoice collection unit 20, and a value-added tax calculation unit 30. Each component of the present invention shown in FIG. 2 is performed by a combination of a processor (not shown) and related software provided in an information processing device (e.g., a server or terminal connected to the Internet).

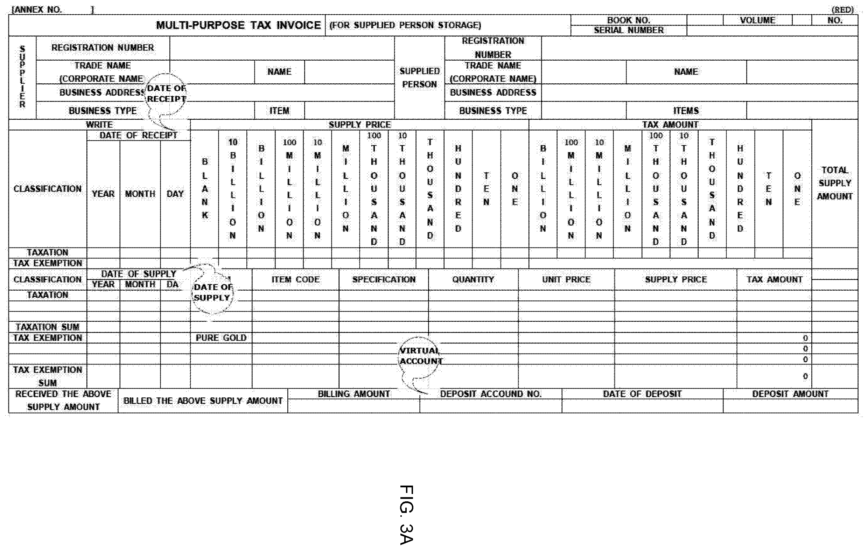

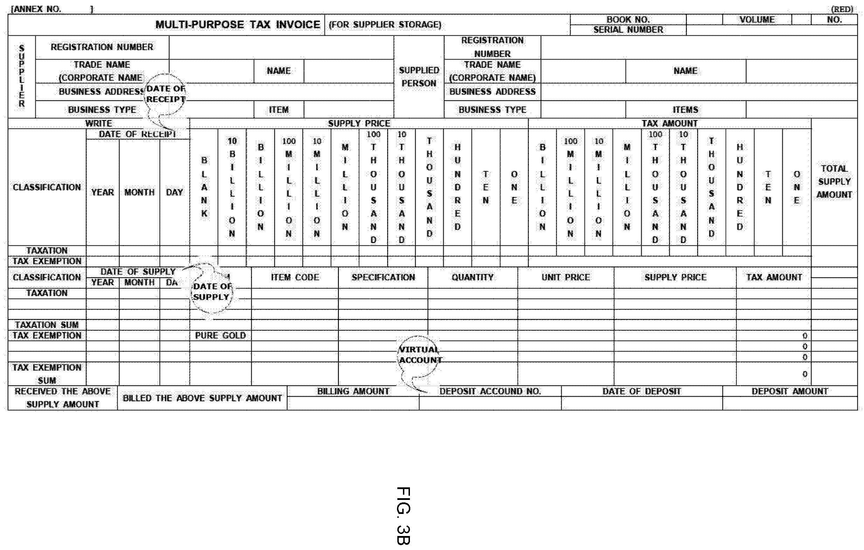

The sales tax invoice issuance unit 10 issues a multi-purpose tax invoice as illustrated in FIG. 3 on the date of receipt of the amount of supply for supplying goods or services. In the multi-purpose tax invoice issued by the sales tax invoice issuance unit 10, the supply price, which is the price of goods or services excluding tax, is recorded, but taxable items and non-taxable items (tax-excluded items) are separately recorded. The date of supply is recorded in a transaction list divided into the taxable and non-taxable items. In this way, because the multi-purpose tax invoice issued by the sales tax invoice issuance unit 10 according to the present invention has a receipt function for receiving payment, when an issuer does not pay the tax, the multi-purpose tax invoice is regarded as a different tax invoice from the fact. Thus, this is a basis for excluding the purchase tax deduction of a supplied person.

In addition, the amount of supply obtained by adding the sales tax amount of the taxable items to the supply price (sales amount) is recorded in the multi-purpose tax invoice.

In a tax invoice according to the related art as illustrated in FIG. 1, taxable and non-taxable items are not distinguished from each other, but only value-added tax (VAT) in which a uniformly determined tax rate (for example, 10%) is applied to the amount of supply, is recorded. Thus, although double taxation and redemption effects cannot be eliminated, the supply price is recorded in the multi-purpose tax invoice according to the present invention, and the taxable and non-taxable items are separately recorded so that there is an effect of fundamentally blocking the occurrence of duplicate taxation and redemption effect.

The sales tax invoice issuance unit 10 may be issued in an electronic manner and provided to a person receiving goods or services and a taxation institution, or may be issued in a paper format.

The sales tax invoice issuance unit 10 may apply to the National Tax Service for a virtual account that can pay the amount of supply in the multi-purpose tax invoice, and may be granted and described. This is to allow deposits to the virtual account linked to the multi-purpose tax invoice so as to eliminate the concern that the supplier may not be able to deduct the purchase tax amount if the supplier does not pay the tax even though the supplier receives the amount of supply and prepares and issues a multi-purpose tax invoice after receiving the amount of supply. In addition, because the government treasury outflows when the supplied person purchases on credit and receives purchase tax deducted or refunded, this outflow can be prevented by using the virtual account.

In addition, it is preferable that the supply price of the amount deposited into the virtual account is required to be deposited to the supplier's business account and the sales tax amount of taxable items is required to be deposited to the supplier's sales tax account separately.

The purchase tax invoice collection unit 20 collects the multi-purpose tax invoices provided while paying the purchase price for purchasing the goods or services necessary for the goods or services to be supplied. The purchase tax invoice collection unit 20 determines whether the registration number of the person receiving the multi-purpose tax invoice issued in an electronic manner coincides with the registration number of the business operator processed by the value-added tax calculation system 1 according to the present invention, to collect multi-purpose tax invoices for purchases, or to receive the values of each item listed on the basis of multi-purpose tax invoices for purchases written on paper.

The value-added tax calculation unit 30 calculates an amount obtained by subtracting the total amount of purchase tax amount collected by the purchase tax invoice collection unit 20 from the total amount of sales tax amount issued by the sales tax invoice issuance unit 10 for a certain taxable period, as VAT. In this case, the value-added tax calculation unit 30 may regard the multi-purpose tax invoice different from the fact when the issuer of the multi-purpose tax invoice of the purchase tax collected by the purchase tax invoice collection unit 20 does not pay tax, and may exclude the purchase tax amount for the amount.

Hereinafter, a value-added tax calculation method using a multi-purpose tax invoice according to the present invention applied to the jewelry industry will be described.

The jewelry industry is an industry in which precious metals such as gold and silver and gemstones such as diamonds are traded separately or both are combined to plan (design, marketing) in the form of ornaments such as rings or necklaces, manufacture and process them (casting, crafting, polishing, etc.), and then are buying and selling transactions.

On the other hand, it can be seen that the consumption tax has the effect of being settled as the national tax revenue only when the consumer finally uses goods and the value of the goods disappears. Thus, when the goods supplied to consumers cannot be finally consumed, the goods should be considered that they cannot be subject to VAT. However, since the Republic of Korea imposes VAT on pure gold, value-added value is imposed whenever pure gold without consumption of value is sold to consumers, resulting in a contradiction in double taxation and a redemption effect.

In the Republic of Korea, the domestic price of gold is determined in conjunction with the international price.

That is, assuming the international price is 100, the selling price of normal gold is determined to be 110.66 ((import price(100) + floating margin(0.6)) × 1.1), and the old gold recovered after being sold to consumers is approximately 105 (collection price(102) + collection margin(2) + wholesaler margin(1)).

According to the basic principle of VAT, an old gold collector who collects old gold directly at KRW 1,020,000 and sells it at KRW 1,040,000 should bear only KRW 1,818 of VAT on the profit of KRW 20,000. In the current system, due to the redemption effect KRW 92,728, as shown in Table 1, the old gold collector has to pay more VAT as much as the redemption effect, i.e., KRW 94,546. In this case, when you issue a tax invoice, you will lose KRW 74,546, so you cannot issue a tax invoice. The old gold wholesaler who purchases old gold at KRW 1,040,000 and does not receive a tax invoice therefor will pay mor KRW 94,846 due to the redemption effect even though the normal amount of tax is KRW 909 with a profit of KRW10,000 won, so the amount of tax paid is KRW 95,455. Moreover, since the price of old

EP 4 131 124 A1

gold or imported gold is linked with the international market price, it is a structure in which business operators cannot arbitrarily determine the purchase and sale price.

Thus, the redemption effect is unavoidable, and because it is practically impossible to issue a tax invoice, such gold is inevitably traded negatively.

[Table 1]

| Classification | | Business operator who collects old gold | Old gold wholesaler |
|---|---|---|---|
| Purchase amount | Taxation | | |
| | Tax exemption or no data | 1,020,000 | 1,040,000 |
| Purchase tax amount | | 0 | 0 |
| The amount of purchase | | 1,020,00 | 1,040,000 |
| Added value | Taxation | 18,182 | 9,091 |
| | Tax exemption | | |
| Sales amount | Taxation | 945,454 | 954,545 |
| | Tax exemption | | |
| Sales tax amount | | 94,546 | 95,455 |
| Sales supply amount (Receipt amount) | | 1,040,000 | 1,050,00 |
| Deemed purchase tax deduction | | 0 | 0 |
| Amount of tax paid | Exact calculated VAT | 1,818 | 909 |
| | Redemption effect | 92,728 | 94,546 |
| | Sum | 94,546 | 95,455 |

Table 2 shows an example of the value-added tax calculation method according to the related art for the entire transaction process of the jewelry industry.

Referring to Table 2, although the sum of real added value from the stage of collecting old gold in the jewelry industry, from the stage of making jewelry products, through wholesalers to retailers, is 377,273 won, the sum of the amount of tax paid under a tax invoice system according to the related art is 650,908 won, which shows that the reality is that the entire jewelry industry has no choice but to avoid VAT reporting. In this case, the national tax revenue for the entire transaction process is effectively 0 won (in Table 2, 'Purchase amount' and 'Purchase tax amount' are the content of the purchase tax invoice of the supplied person, and 'Sales amount' and 'Sales tax amount' are the content of the tax invoice issued by the supplier, and it is impossible to issue a tax invoice in the value-added tax calculation method according to the related art.)

[Table 2]

| Classification | | Old gold collector | Old gold wholesaler | Jewelry manufacturer | Precious metal wholesaler | Precious metal retailer | National tax revenue |
|---|---|---|---|---|---|---|---|
| Purchase amount | Taxation | | | 472,727 | 0 | 0 | |
| | No data (tax exemption) | 1,020,000 | 1,040,000 | 1,050,000 | 1,790,000 | 1,845,000 | |
| Purchase tax amount | | 0 | 0 | 47,273 | 0 | 0 | |
| The amount of purchase | | 1,020,000 | 1,040,000 | 1,570,000 | 1,790,000 | 1,845,000 | |
| Added value | Taxation | 18,182 | 9,091 | 200,000 | 50,000 | 100,000 | 377,273 |
| | Tax exemption | | | | | | |

(continued)

| Classification | | Old gold collector | Old gold wholesaler | Jewelry manufacturer | Precious metal wholesaler | Precious metal retailer | National tax revenue |
|---|---|---|---|---|---|---|---|
| Sales amount | Taxation | 945,454 | 954,545 | 1,627,273 | 1,677,273 | 1,777,273 | |
| | Tax exemption | | | | | | |
| Sales tax amount | | 94,546 | 95,455 | 162,727 | 167,727 | 177,727 | |
| Sales supply amount (receipt amount) | | 1,040,000 | 1,050,000 | 1,790,000 | 1,845,000 | 1,955,000 | |
| Deemed purchase tax deduction | | 0 | 0 | 0 | 0 | 0 | |
| The amount of tax paid | Exact calculated VAT | 1,818 | 909 | 20,000 | 5,000 | 10,000 | 37,727 |
| | Redemption effect | 92,728 | 94,546 | 95,454 | 162,727 | 167,727 | 613,181 |
| | Sum | 94,546 | 95,455 | 115,454 | 167,727 | 177,727 | 650,908 |

Referring to Table 3, when the deemed purchase tax for old gold is deducted at a rate of 10/110 for old gold collectors, the double taxation and redemption effect of all domestic business operators is eliminated. However, when exporting old gold, an outflow of the national treasury occurs as much as the deemed purchase tax deduction. In other words, the government gets paid 1,818 won for old gold collectors, 909 won for old gold wholesalers, 20,000 won for jewelry manufacturers, 5,000 won for jewelry wholesalers and 520,000 × 10/110 = 47,272 won for jewelry suppliers, totaling 74,999 won and refunded 167,727 won. Therefore, a treasury loss of KRW 92,728 occurs.

[Table 3]

| Classification | | Old gold collector | Old gold wholesaler | Jewelry manufacturer | Precious metal wholesaler | Precious metal exporter | National tax revenue |
|---|---|---|---|---|---|---|---|
| Purchase amount | Taxation | | 945,454 | 1,427,273 | 1,627,273 | 1,677,273 | |
| | No data (tax exemption) | 1,020,000 | | | | | |
| Purchase tax amount | | 0 | 94,545 | 142,727 | 162,727 | 167,727 | |
| The amount of purchase | | 1,020,000 | 1,040,000 | 1,570,000 | 1,790,000 | 1,845,000 | |
| Added value | Taxation | 18,182 | 9,091 | 200,000 | 50,000 | 100,000 | 377,273 |
| | Tax exemption | | | | | | |
| Sales amount | Taxation | 945,454 | 954,545 | 1,627,273 | 1,677,273 | 1,955,000 | |
| | Tax exemption | | | | | | |
| Sales tax amount | | 94,545 | 95,455 | 162,727 | 167,727 | 0 | |
| Sales supply amount (receipt amount) | | 1,040,000 | 1,050,000 | 1,790,000 | 1,845,000 | 1,955,000 | |
| Deemed purchase tax deduction | | 92,727 | 0 | 0 | 0 | 0 | |

(continued)

| Classification | | Old gold collector | Old gold wholesaler | Jewelry manufacturer | Precious metal wholesaler | Precious metal exporter | National tax revenue |
|---|---|---|---|---|---|---|---|
| The amount of tax paid | Exact calculated VAT | 1,818 | 909 | 20,000 | 5,000 | Refunded 167,727 | Treasury loss of 92,728 |
| | Redemption effect | | | | | | |
| | Sum | 1,818 | 909 | 20,000 | 5,000 | | 37,727 |

In contrast, according to the value-added value calculation method using the multi-purpose tax invoice according to the present invention, as shown in Table 4, multi-purpose tax invoices are received from the business operators that collect old gold for the first time to the retailers of jewelry products, and it shows a situation where only 10% of the value added produced by the business operators and the retailers for each transaction stage is taxed. Here, it can be seen that the value-added (excluding the value-added for jewelry) produced in all transactions is 377,273 won, and the tax paid is 37,727 won (in Table 4, 'Purchase amount' and 'Purchase tax amount' are the content of the supplied person's multi-purpose purchase tax invoice, and 'Sales amount' and 'Sales tax amount' are the content of the multi-purpose tax invoice issued by the supplier, and in the case of issuing a multi-purpose tax invoice, it can be seen that it has been improved so that only the VAT produced by the supplier can be paid.)

[Table 4]

| Classification | | Old gold collector | Old gold wholesaler | Jewelry manufacturer | Precious metal wholesaler | Precious metal retailer | National tax revenue |
|---|---|---|---|---|---|---|---|
| Purchase amount | Taxation | | 18,181 | 500,000 | 700,000 | 750,000 | |
| | No data (tax exemption) | 1,020,000 | 1,020,000 | 1,020,000 | 1,020,000 | 1,020,000 | |
| Purchase tax amount | | 0 | 1,818 | 50,000 | 70,000 | 75,000 | |
| The amount of purchase | | 1,020,000 | 1,040,000 | 1,570,000 | 1,790,000 | 1,845,000 | |
| Added value | Taxation | 18,182 | 9,091 | 200,000 | 50,000 | 100,000 | 377,273 |
| | Tax exemption | | | | | | |
| Sales amount | Taxation | 18,182 | 27,272 | 700,000 | 750,000 | 850,000 | |
| | **Tax exemption** | **1,020,000** | **1,020,000** | **1,020,000** | **1,020,000** | **1,020,000** | |
| Sales tax amount | | 1,818 | 2,727 | 70,000 | 75,000 | 85,000 | |
| Sales supply amount (receipt amount) | | 1,040,000 | 1,050,000 | 1,790,000 | 1,845,000 | 1,955,000 | |
| Deemed purchase tax deduction | | 0 | 0 | 0 | 0 | | |
| The amount of tax paid | Exact calculated VAT | 1,818 | 909 | 20,000 | 5,000 | 10,000 | 37,727 |
| | Redemption effect | 0 | | | | | |
| | Sum | 1,818 | 909 | 20,000 | 5,000 | 10,000 | 37,727 |

Hereinafter, the value-added tax calculation method using the multi-purpose tax invoice according to the present invention applied to precious metal wholesalers in the jewelry industry will be described in detail.

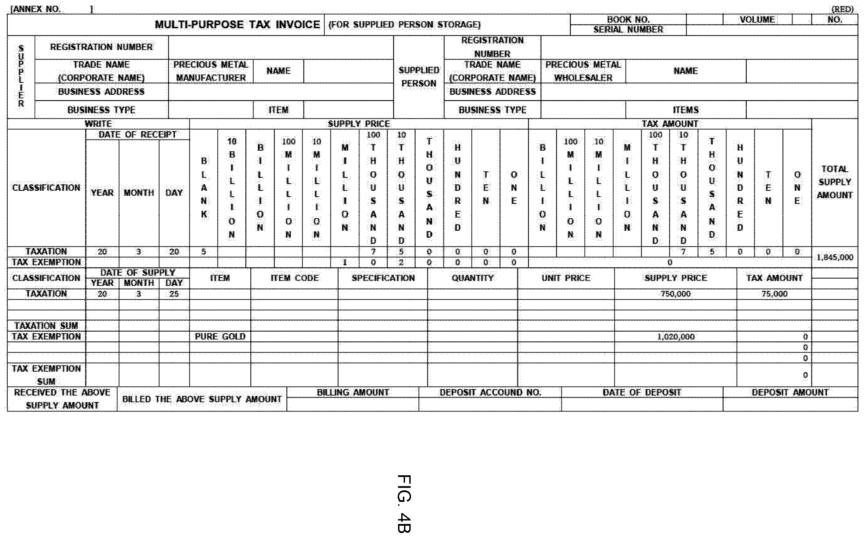

In the value-added tax calculation system 1 of the precious metal wholesaler, the sales tax invoice issuance unit 10 issues a multi-purpose tax invoice for sales on the date of receipt (e.g., March 20, 2020) of the amount of supply for precious metal from the precious metal retailers, as illustrated in FIG. 4B. As shown in FIG. 4B, the supply prices (sales amount) is recorded in the multi-purpose tax invoice, but the taxable items (750,000 won) and the non-taxable items (1,020,000 won) are separately recorded in the multi-purpose tax invoice. The date of supply (e.g., February 25, 2020) is written in the transaction list divided into taxable and non-taxable items. Because the multi-purpose tax invoice issued in this way has a function of receipt of payment, when the issuer does not pay the tax, the multi-purpose tax invoice will be regarded as a different tax invoice from the fact, and there is no basis for excluding the purchase tax deduction of the supplied person. In addition, in the multi-purpose sales tax invoice, the amount of supply (1,845,000 won) is recorded by adding the sales tax amount (75,000 won) of the taxable item to the supply price (1,770,000 won).

Although not shown in FIG. 4B, the sales tax invoice issuing unit 10 may apply to the National Tax Service for a virtual account that can pay the amount of supply in the multi-purpose tax invoice and be given and described. This is to allow deposits to the virtual account linked to the multi-purpose tax invoice so as to eliminate the concern that the supplier may not be able to receive deduction of the purchase tax amount if the supplier does not pay the tax even though the supplier receives the amount of supply and prepares and issues a multi-purpose tax invoice after receiving the amount of supply. In addition, because the government treasury outflows when the supplied person purchases on credit and receives purchase tax deducted or refunded, this outflow can be prevented by using the virtual account.

In addition, it is preferable that the amount of supply of the amount deposited into the virtual account is deposited to the supplier's business account and the sales tax amount of taxable items is deposited to the supplier's sales tax account separately.

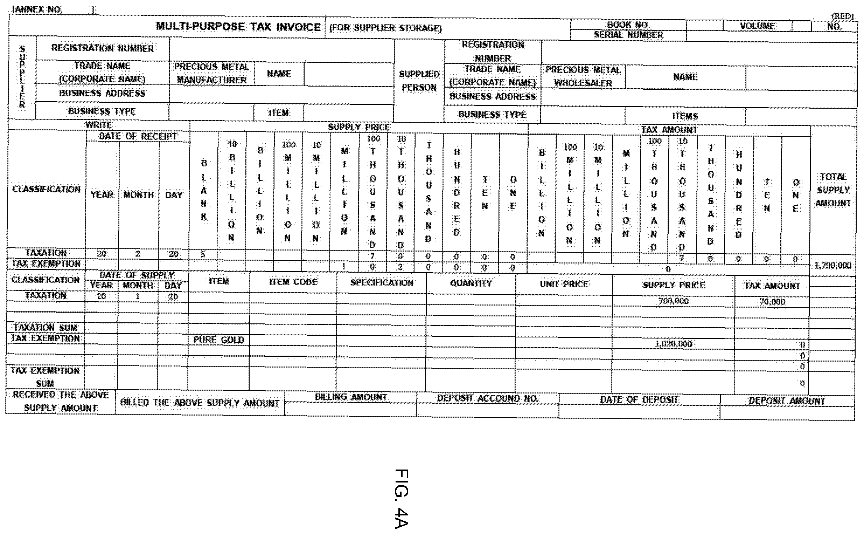

On the other hand, in the value-added tax calculation system 1 of the precious metal wholesaler, the multi-purpose tax invoice (see FIG. 4A) provided while paying the purchase price for purchasing the precious metal for sale to the precious metal retailer is collected. In the multi-purpose tax invoice for purchase, the purchase amount is 1,790,000 won, but this is the sum of taxable items (700,000 won) and non-taxable items (1,020,000 won) plus value-added tax (70,0000 won) on taxable items.

Thus, the value-added tax calculation unit 30 of the value-added tax calculation system 1 of the precious metal wholesaler calculates the amount (5,000 won) obtained by subtracting the total amount of purchase tax (70,000 won) collected by the purchase tax invoice collection unit 20 from the total amount of sales tax (75,000 won) issued by the sales tax invoice issuance unit 10 for a certain tax period. In this case, when the issuer of the multi-purpose tax invoice of the purchase tax amount collected by the purchase tax invoice collection unit 20 does not pay tax, the value-added tax collection unit 30 of the value-added tax calculation system 1 of the precious metal wholesaler regards the case as a multi-purpose tax invoice different from the fact and excludes the purchase tax deduction for the amount.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. A value-added tax calculation system using a multi-purpose tax invoice, the value-added tax calculation system for calculating value-added tax by using an all-stage tax credit method, comprising:

   a sales tax invoice issuance unit configured to issue a multi-purpose tax invoice on a date of receipt of an amount of supply for supplying goods or services, wherein, in a supply price as a price of goods or services excluding tax, taxable items and non-taxable items are separately recorded, the sales tax invoice issuance unit issuing a multi-purpose tax invoice in which the amount of supply obtained by adding a sales tax amount of the taxable items to the supply price is recorded;
   a purchase tax invoice collection unit configured to collect multi-purpose tax invoices provided while paying a purchase price for purchasing goods or services necessary for the goods or services to be supplied; and
   a value-added tax calculation unit configured to calculate an amount obtained by deducting a total amount of purchase tax amount collected by the purchase tax invoice collection unit from a total amount of sales tax amount issued by the sales tax invoice issuance unit for a certain taxable period, as value-added tax (VAT),
   wherein the sales tax invoice issuance unit applies to the National Tax Service for a virtual account that can pay the amount of supply in the multi-purpose tax invoice, the virtual account is granted and described, and the supply price of the amount deposited into the virtual account is deposited to the supplier's business account and the sales tax amount of taxable items is deposited to the supplier's sales tax account separately, and

when the issuer of the multi-purpose tax invoice of the purchase tax amount collected by the purchase tax invoice collection unit does not pay tax, the value-added tax calculation unit regards the case as a multi-purpose tax invoice different from the fact and excludes purchase tax deduction for the amount.

**MULTI-PURPOSE TAX INVOICE** (FOR SUPPLIED PERSON STORAGE)

| | | BOOK NO. | | VOLUME | | NO. |
| --- | --- | --- | --- | --- | --- | --- |
| | | SERIAL NUMBER | | | | |

| SUPPLIER | REGISTRATION NUMBER | | | | SUPPLIED PERSON | REGISTRATION NUMBER | | |
| --- | --- | --- | --- | --- | --- | --- | --- | --- |
| | TRADE NAME (CORPORATE NAME) | | NAME | | | TRADE NAME (CORPORATE NAME) | | NAME |
| | BUSINESS ADDRESS | | | | | BUSINESS ADDRESS | | |
| | BUSINESS TYPE | | ITEM | | | BUSINESS TYPE | | ITEMS |

| WRITE | | | | SUPPLY PRICE | | | | | | | | | | | | | | TAX AMOUNT | | | | | | | | | | |
| --- | --- | --- | --- | --- | --- | --- | --- | --- | --- | --- | --- | --- | --- | --- | --- | --- | --- | --- | --- | --- | --- | --- | --- | --- | --- | --- | --- |
| CLASSIFICATION | DATE OF RECEIPT | | | BLANK | 10 BILLION | BILLION | 100 MILLION | 10 MILLION | MILLION | 100 THOUSAND | 10 THOUSAND | THOUSAND | HUNDRED | TEN | ONE | BILLION | 100 MILLION | 10 MILLION | MILLION | 100 THOUSAND | 10 THOUSAND | THOUSAND | HUNDRED | TEN | ONE | TOTAL SUPPLY AMOUNT |
| | YEAR | MONTH | DAY | | | | | | | | | | | | | | | | | | | | | | | |
| TAXATION | | | | | | | | | | | | | | | | | | | | | | | | | | |
| TAX EXEMPTION | | | | | | | | | | | | | | | | | | | | | | | | | | |

| CLASSIFICATION | DATE OF SUPPLY | | | ITEM | ITEM CODE | SPECIFICATION | QUANTITY | UNIT PRICE | SUPPLY PRICE | TAX AMOUNT | |
| --- | --- | --- | --- | --- | --- | --- | --- | --- | --- | --- | --- |
| | YEAR | MONTH | DAY | | | | | | | | |
| TAXATION | | | | | | | | | | | |
| | | | | | | | | | | | |
| | | | | | | | | | | | |
| TAXATION SUM | | | | | | | | | | | |
| TAX EXEMPTION | | | | PURE GOLD | | | | | | | 0 |
| | | | | | | | | | | | 0 |
| | | | | | | | | | | | 0 |
| TAX EXEMPTION SUM | | | | | | | | | | | 0 |

| RECEIVED THE ABOVE SUPPLY AMOUNT | BILLED THE ABOVE SUPPLY AMOUNT | BILLING AMOUNT | DEPOSIT ACCOUND NO. | DATE OF DEPOSIT | DEPOSIT AMOUNT |
| --- | --- | --- | --- | --- | --- |
| | | | | | |

FIG. 1

EP 4 131 124 A1

VALUE-ADDED TAX CALCULATION UNIT

30

1

PURCHASE TAX INVOICE COLLECTION UNIT

20

SALES TAX INVOICE ISSUANCE UNIT

10

FIG. 2

EP 4 131 124 A1

[ANNEX NO.          ]                                                                                                                              (RED)

| MULTI-PURPOSE TAX INVOICE (FOR SUPPLIED PERSON STORAGE) | BOOK NO. | VOLUME | NO. |
| | SERIAL NUMBER | | |

**SUPPLIER**

| REGISTRATION NUMBER | | | | | |
| TRADE NAME (CORPORATE NAME) | | NAME | | | |
| BUSINESS ADDRESS | DATE OF RECEIPT | | | | |
| BUSINESS TYPE | | ITEM | | | |

**SUPPLIED PERSON**

| REGISTRATION NUMBER | | |
| TRADE NAME (CORPORATE NAME) | | NAME |
| BUSINESS ADDRESS | | |
| BUSINESS TYPE | | ITEMS |

**WRITE / DATE OF RECEIPT / SUPPLY PRICE / TAX AMOUNT**

| CLASSIFICATION | YEAR | MONTH | DAY | BLANK | 10 BILLION | BILLION | 100 MILLION | 10 MILLION | MILLION | 100 THOUSAND | 10 THOUSAND | THOUSAND | HUNDRED | TEN | ONE | BILLION | 100 MILLION | 10 MILLION | MILLION | 100 THOUSAND | 10 THOUSAND | THOUSAND | HUNDRED | TEN | ONE | TOTAL SUPPLY AMOUNT |
|---|---|---|---|---|---|---|---|---|---|---|---|---|---|---|---|---|---|---|---|---|---|---|---|---|---|---|
| TAXATION | | | | | | | | | | | | | | | | | | | | | | | | | | |
| TAX EXEMPTION | | | | | | | | | | | | | | | | | | | | | | | | | | |

| CLASSIFICATION | YEAR | MONTH | DA | DATE OF SUPPLY | ITEM CODE | SPECIFICATION | QUANTITY | UNIT PRICE | SUPPLY PRICE | TAX AMOUNT |
|---|---|---|---|---|---|---|---|---|---|---|
| TAXATION | | | | | | | | | | |
| | | | | | | | | | | |
| | | | | | | | | | | |
| TAXATION SUM | | | | | | | | | | |
| TAX EXEMPTION | | | PURE GOLD | | | | | | | 0 |
| | | | | | | | | | | 0 |
| | | | | | VIRTUAL ACCOUNT | | | | | 0 |
| TAX EXEMPTION SUM | | | | | | | | | | 0 |

| RECEIVED THE ABOVE SUPPLY AMOUNT | BILLED THE ABOVE SUPPLY AMOUNT | BILLING AMOUNT | DEPOSIT ACCOUND NO. | DATE OF DEPOSIT | DEPOSIT AMOUNT |
|---|---|---|---|---|---|

FIG. 3A

[ANNEX NO.        ]                                                                                                                          (RED)

| MULTI-PURPOSE TAX INVOICE | (FOR SUPPLIER STORAGE) | BOOK NO. | VOLUME | NO. |
| | | SERIAL NUMBER | | |

**SUPPLIER**

| REGISTRATION NUMBER | | | | | **SUPPLIED PERSON** | REGISTRATION NUMBER | | |
| TRADE NAME (CORPORATE NAME) | | NAME | | | | TRADE NAME (CORPORATE NAME) | | NAME |
| BUSINESS ADDRESS | DATE OF RECEIPT | | | | | BUSINESS ADDRESS | | |
| BUSINESS TYPE | | ITEM | | | | BUSINESS TYPE | | ITEMS |

| WRITE | | | | | SUPPLY PRICE | | | | | | | | | | | | | TAX AMOUNT | | | | | | | | | | |
| CLASSIFICATION | DATE OF RECEIPT | | | BLANK | 10 BILLION | BILLION | 100 MILLION | 10 MILLION | MILLION | 100 THOUSAND | 10 THOUSAND | THOUSAND | HUNDRED | TEN | ONE | BILLION | 100 MILLION | 10 MILLION | MILLION | 100 THOUSAND | 10 THOUSAND | THOUSAND | HUNDRED | TEN | ONE | TOTAL SUPPLY AMOUNT |
| | YEAR | MONTH | DAY | | | | | | | | | | | | | | | | | | | | | | | |
| TAXATION | | | | | | | | | | | | | | | | | | | | | | | | | | |
| TAX EXEMPTION | | | | | | | | | | | | | | | | | | | | | | | | | | |

| CLASSIFICATION | DATE OF SUPPLY | | DATE OF SUPPLY | ITEM CODE | SPECIFICATION | QUANTITY | UNIT PRICE | SUPPLY PRICE | TAX AMOUNT |
| | YEAR | MONTH | DA | | | | | | |
| TAXATION | | | | | | | | | |
| | | | | | | | | | |
| | | | | | | | | | |
| TAXATION SUM | | | | | | | | | |
| TAX EXEMPTION | | | PURE GOLD | | | | | | 0 |
| | | | | | VIRTUAL ACCOUNT | | | | 0 |
| | | | | | | | | | 0 |
| TAX EXEMPTION SUM | | | | | | | | | 0 |

| RECEIVED THE ABOVE SUPPLY AMOUNT | BILLED THE ABOVE SUPPLY AMOUNT | BILLING AMOUNT | DEPOSIT ACCOUND NO. | DATE OF DEPOSIT | DEPOSIT AMOUNT |

FIG. 3B

(RED)

[ANNEX NO.      ]

**MULTI-PURPOSE TAX INVOICE** (FOR SUPPLIER STORAGE)

| BOOK NO. SERIAL NUMBER | | VOLUME | | NO. |

**SUPPLIER**

| REGISTRATION NUMBER | |
| TRADE NAME (CORPORATE NAME) | PRECIOUS METAL MANUFACTURER | NAME | |
| BUSINESS ADDRESS | |
| BUSINESS TYPE | | ITEM | |

**SUPPLIED PERSON**

| REGISTRATION NUMBER | |
| TRADE NAME (CORPORATE NAME) | PRECIOUS METAL WHOLESALER | NAME | |
| BUSINESS ADDRESS | |
| BUSINESS TYPE | | ITEMS | |

| CLASSIFICATION | WRITE DATE OF RECEIPT | | | SUPPLY PRICE | | | | | | | | | | | | | TAX AMOUNT | | | | | | | | | TOTAL SUPPLY AMOUNT |
|---|---|---|---|---|---|---|---|---|---|---|---|---|---|---|---|---|---|---|---|---|---|---|---|---|---|---|
| | YEAR | MONTH | DAY | BLANK | 10 BILLION | BILLION | 100 MILLION | 10 MILLION | MILLION | 100 THOUSAND | 10 THOUSAND | THOUSAND | HUNDRED | TEN | ONE | BILLION | 100 MILLION | 10 MILLION | MILLION | 100 THOUSAND | 10 THOUSAND | THOUSAND | HUNDRED | TEN | ONE | |
| TAXATION | 20 | 2 | 20 | 5 | | | | | | 7 | 0 | 0 | 0 | 0 | 0 | | | | | | 7 | 0 | 0 | 0 | 0 | |
| TAX EXEMPTION | | | | | | | | | 1 | 0 | 2 | 0 | 0 | 0 | 0 | | | | | | 0 | | | | | 1,790,000 |

| CLASSIFICATION | DATE OF SUPPLY | | | ITEM | ITEM CODE | SPECIFICATION | QUANTITY | UNIT PRICE | SUPPLY PRICE | TAX AMOUNT | |
|---|---|---|---|---|---|---|---|---|---|---|---|
| | YEAR | MONTH | DAY | | | | | | | | |
| TAXATION | 20 | 1 | 20 | | | | | | 700,000 | 70,000 | |
| | | | | | | | | | | | |
| TAXATION SUM | | | | | | | | | | | |
| TAX EXEMPTION | | | | PURE GOLD | | | | | 1,020,000 | 0 | |
| | | | | | | | | | | 0 | |
| | | | | | | | | | | 0 | |
| TAX EXEMPTION SUM | | | | | | | | | | 0 | |

| RECEIVED THE ABOVE SUPPLY AMOUNT | BILLED THE ABOVE SUPPLY AMOUNT | BILLING AMOUNT | DEPOSIT ACCOUND NO. | DATE OF DEPOSIT | DEPOSIT AMOUNT |
|---|---|---|---|---|---|

FIG. 4A

(RED)

## MULTI-PURPOSE TAX INVOICE (FOR SUPPLIED PERSON STORAGE)

| BOOK NO. SERIAL NUMBER | VOLUME | NO. |
|---|---|---|

**SUPPLIER**

| REGISTRATION NUMBER | |
|---|---|
| TRADE NAME (CORPORATE NAME) | PRECIOUS METAL MANUFACTURER | NAME | |
| BUSINESS ADDRESS | |
| BUSINESS TYPE | ITEM |

**SUPPLIED PERSON**

| REGISTRATION NUMBER | |
|---|---|
| TRADE NAME (CORPORATE NAME) | PRECIOUS METAL WHOLESALER | NAME | |
| BUSINESS ADDRESS | |
| BUSINESS TYPE | ITEMS |

| | WRITE | | | | SUPPLY PRICE | | | | | | | | | | | | TAX AMOUNT | | | | | | | | | | | | |
|---|---|---|---|---|---|---|---|---|---|---|---|---|---|---|---|---|---|---|---|---|---|---|---|---|---|---|---|---|---|
| | DATE OF RECEIPT | | | | | | | | | | | | | | | | | | | | | | | | | | | | |
| CLASSIFICATION | YEAR | MONTH | DAY | BLANK | 10 BILLION | BILLION | 100 MILLION | 10 MILLION | MILLION | 100 THOUSAND | 10 THOUSAND | THOUSAND | HUNDRED | TEN | ONE | BILLION | 100 MILLION | 10 MILLION | MILLION | 100 THOUSAND | 10 THOUSAND | THOUSAND | HUNDRED | TEN | ONE | TOTAL SUPPLY AMOUNT |
| TAXATION | 20 | 3 | 20 | 5 | | | | | | 7 | 5 | 0 | 0 | 0 | 0 | | | | | | 7 | 5 | 0 | 0 | 0 | 1,845,000 |
| TAX EXEMPTION | | | | | | | | | 1 | 0 | 2 | 0 | 0 | 0 | 0 | | | | | | | 0 | | | | |

| CLASSIFICATION | DATE OF SUPPLY | | | ITEM | ITEM CODE | SPECIFICATION | QUANTITY | UNIT PRICE | SUPPLY PRICE | TAX AMOUNT |
|---|---|---|---|---|---|---|---|---|---|---|
| | YEAR | MONTH | DAY | | | | | | | |
| TAXATION | 20 | 3 | 25 | | | | | | 750,000 | 75,000 |
| | | | | | | | | | | |
| | | | | | | | | | | |
| TAXATION SUM | | | | | | | | | | |
| TAX EXEMPTION | | | PURE GOLD | | | | | | 1,020,000 | 0 |
| | | | | | | | | | | 0 |
| | | | | | | | | | | 0 |
| TAX EXEMPTION SUM | | | | | | | | | | 0 |

| RECEIVED THE ABOVE SUPPLY AMOUNT | BILLED THE ABOVE SUPPLY AMOUNT | BILLING AMOUNT | DEPOSIT ACCOUND NO. | DATE OF DEPOSIT | DEPOSIT AMOUNT |
|---|---|---|---|---|---|

FIG. 4B

# EP 4 131 124 A1

## INTERNATIONAL SEARCH REPORT

| | International application No. |
|---|---|
| | **PCT/KR2020/010200** |

### A. CLASSIFICATION OF SUBJECT MATTER

G06Q 40/00(2006.01)i; G06Q 30/04(2012.01)i; G06Q 40/02(2012.01)i

According to International Patent Classification (IPC) or to both national classification and IPC

### B. FIELDS SEARCHED

Minimum documentation searched (classification system followed by classification symbols)

G06Q 40/00; G06Q 10/06; G06Q 20/10; G06Q 30/04; G06Q 40/02; G06Q 40/04; G06Q 50/26

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 부가가치세(value-added tax), 다목적세금계산서(multipurpose tax invoice), 매출세금(sale tax), 매입세금(purchase tax), 계좌(account)

### C. DOCUMENTS CONSIDERED TO BE RELEVANT

| Category* | Citation of document, with indication, where appropriate, of the relevant passages | Relevant to claim No. |
|---|---|---|
| A | 차삼준. 부가가치세법상 환급제도 개선방안 연구 : 매입세액 공제·환급 제도에서 국고유출에 대한 대책을 중심으로. 경희대학교, 석사학위논문. August 2015, pp. 1-75 (CHA, Sam Jun. A study on Improving of VAT refund system : Focused on draining national treasury of deduction & refund system of input VAT. Thesis, Kyung Hee University.). See pages 1, 11, 12 and 65. | 1 |
| A | 한국세정신문. 귀금속 거래...겸용세금계산서로 투명성 확보 가능. [online], 23 November 2015. non-official translation (Taxtimes. To ensure transparency in the transaction of precious metals, taxable and non-taxable tax invoices must be used). [Retrieved on 10 July 2020] <http://www.taxtimes.co.kr/news/article.html?no=211512>. See pages 1-3. | 1 |
| A | KR 10-2018-0007396 A (DUZON DASS. CO., LTD.) 23 January 2018. See paragraph [0046] and claim 7. | 1 |
| A | KR 10-2014-0033872 A (WEBCASH CORP.) 19 March 2014. See paragraphs [0002]-[0025]. | 1 |

☑ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **23 December 2020** | **23 December 2020** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT

International application No.

**PCT/KR2020/010200**

### C. DOCUMENTS CONSIDERED TO BE RELEVANT

| Category* | Citation of document, with indication, where appropriate, of the relevant passages | Relevant to claim No. |
|---|---|---|
| A | KR 10-2016-0028010 A (UNIVERSITY OF SEOUL INDUSTRY COOPERATION FOUNDATION.) 11 March 2016. See paragraph [0024] and claim 1. | 1 |
| PX | KR 10-2136880 B1 (CHA, Sam Jun) 23 July 2020. See claim 1. * This document is the published patent of a priority application(KR) of the present PCT application. | 1 |

Form PCT/ISA/210 (second sheet) (July 2019)

**INTERNATIONAL SEARCH REPORT**
Information on patent family members

International application No.

**PCT/KR2020/010200**

| Patent document cited in search report | | | Publication date (day/month/year) | Patent family member(s) | | | Publication date (day/month/year) |
|---|---|---|---|---|---|---|---|
| KR | 10-2018-0007396 | A | 23 January 2018 | None | | | |
| KR | 10-2014-0033872 | A | 19 March 2014 | None | | | |
| KR | 10-2016-0028010 | A | 11 March 2016 | CN | 105389723 | A | 09 March 2016 |
| | | | | KR | 10-1665185 | B1 | 12 October 2016 |
| KR | 10-2136880 | B1 | 23 July 2020 | None | | | |

Form PCT/ISA/210 (patent family annex) (July 2019)

**EP 4 131 124 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 100787166
- KR 101305276
- KR 101075217